# EUROPEAN PATENT SPECIFICATION

(11) **EP 3 150 036 B1**
(45) Date of publication and mention of the grant of the patent: **27.02.2019**
(21) Application number: 15192620.1
(22) Date of filing: 02.11.2015
(51) Int. Cl.: A01B 59/06

(54) **DEVICE FOR CONNECTING AN AGRICULTURAL ACCESSORY TO AN AGRICULTURAL TRACTOR VEHICLE**
VORRICHTUNG ZUM VERBINDEN EINES LANDWIRTSCHAFTLICHEN ZUBEHÖRS AN EIN LANDWIRTSCHAFTLICHES ZUGFAHRZEUG
DISPOSITIF POUR RELIER UN ACCESSOIRE AGRICOLE À UN VÉHICULE TRACTEUR AGRICOLE

(30) Priority: 29.09.2015 ES 201531388
(43) Date of publication of application: 05.04.2017
(73) Proprietor: EXEL INDUSTRIES, 51200 Epernay (FR)
(72) Inventor: GODIA RIBES, José Maria, 25110 Alpicat (Lleida) (ES)
(74) Representative: Ahner, Philippe

(56) References cited:
- DE-A1- 4 136 515
- FR-A1- 2 199 924
- FR-A1- 2 830 166

## Description

The present invention relates to the sector of devices for connecting suspended accessories to agricultural vehicles, and relates in particular to a device for connecting a suspended agricultural sprayer to a suitable agricultural tractor.

The purpose of agricultural sprayers, as the name suggests, is to spray liquid on to a cultivated field. The liquid is contained in a tank supported on a chassis, which is connected to an agricultural tractor for the transportation of the sprayer. Generally speaking, agricultural sprayers comprise an extension device, commonly known as "booms", which allow the liquid to be delivered at the furthest possible distance from the tank in order to cover the greatest possible span of the field in each pass. The liquids that are usually sprayed contain phytosanitary products intended for the treatment of the crops in order to prevent diseases or insect pests, among others.

Suspended agricultural sprayers are characterised in that they are supported by a tractor in an elevated position with respect to the ground, both during their transportation and during their use, that is, including the spraying process. Many of the accessories that are connected to a tractor, as in the case of sprayers of the state of the art, are suitable to be connected to a connection known as a "three-point connection". In this form of connection, the tractor has three points of attachment: two lower arms and one upper arm arranged in the centre of the two said arms. The connecting device forming the subject of the present invention attaches to the upper arm of the three said arms.

In tractors with a three-point connection, the lower arms provide support for the agricultural accessories, and are the ones responsible for elevating and holding the weight of the accessories. The upper arm, on the other hand, does not act as a supporting structure, but rather as a member for fixing the accessory to the agricultural vehicle. The upper arm provides the necessary stability for the transportation of the agricultural accessory, and therefore the connecting of the accessory to the agricultural vehicle must be reliable due to the risk that is generally posed by the accessories due to their substantial weight.

The connection between an agricultural accessory and a tractor, or any agricultural vehicle, is delicate. The known connecting devices, such as disclosed in FR 2 830 166, necessarily require the operator to leave the tractor in order to perform the connecting correctly. First of all, the tractor must be brought close to the accessory so that the connecting arm of the tractor reaches the connecting device of the accessory. Consequently, the distance between the tractor and the accessory at this moment is small, scarcely allowing the operator access. At the moment of the connecting, the operator must enter, or insert his arms into, a very small space between the tractor and accessory, each of which weighs several tons. If an accident were to occur, for example due to mishandling, the operator could be seriously injured.

On the other side, in order to disconnect a connecting device of the state of the art, the operator is forced to descend from the tractor and access the connecting device manually. To separate the tractor from the accessory, he must re-enter the cab of the tractor in order to move the vehicle forwards. At this moment, if the disconnection has not been carried out successfully, the forward movement may tip the accessory onto the cab of the tractor, and this may cause serious injury to the operator driving the tractor. However, even though it is a hazardous manoeuvre, the said forward movement must be made in order for the operator to disconnect from the tractor the power elements of the accessory.

For example, the connecting device disclosed in European Patent EP 2 260 687 A1 is provided with a connecting point on an articulated member which increases the distance between tractor and accessory when rotated. The device is arranged in a horizontal position for connecting to an arm of a vehicle, and then rotates into a vertical position and locks the said arm. The device makes it possible to increase the distance between tractor and accessory at the moment of the connection. However, to disconnect the device, the operator must actuate a cord that forms part of the accessory, and therefore the operator must descend from the tractor in order to carry out the disconnection. Moreover, at the moment of the disconnection, the distance between the tractor and the accessory is reduced due to the vertical position of the articulated member with the connecting point, giving rise to a hazardous situation. The known connecting devices, in order to successfully perform their function, are normally provided with elements for locking the upper arm of the tractor. Some of the said devices include locking elements that can be unlocked only by a relative movement between parts, caused by the weight of the parts themselves. This poses a new disadvantage, since after using the sprayer, the connecting device is full of mud and dirt which increase the friction between the parts of the unlocking device. Consequently, the unlocking cannot be effected by allowing the part to drop under its own weight, because the quantity of accumulated dirt does not allow this and requires the operator to intervene manually.

In view of the disadvantages of the known connecting devices, an aim of the present invention is to solve the said problems.

In particular, the present invention discloses a device for connecting an agricultural accessory to an agricultural tractor vehicle, characterised in that it comprises:
a receiving part adapted to be attached to the agricultural accessory, the said part comprising a guide adapted for displacement of a coupling member attached to the agricultural tractor vehicle, an auxiliary groove and a projection
- a pawl attached to the receiving part in an articulation, the said pawl comprising, at a first mobile end, a projection attached to the projection of the receiving part via an elastic member and, at a second mobile end, a receiving hook for receiving an end of the said coupling member, the said pawl being arranged, when at rest, in an intermediate position in the guide
   - a locking part articulated to the receiving part which has a recess for receiving an end of the pawl
   - a lock actuation part connected to the receiving part via an articulation provided with an elastic torsion member, the said lock actuation part comprising a groove at one end and a lever at a second end of the part, the said second end being arranged opposite the first end in relation to the articulation
   - a connecting part that has an end articulated with respect to the locking part and an opposite end with a pin that runs in the said groove of the lock actuation part and in the auxiliary groove of the receiving part
   - an arming member attached to the receiving part in saidarticulation in which said pawl is attached to said receiving part, the said arming member having, in an area of its articulated travel with respect to the receiving part, a position of interference with the coupling member, the said interference position, being in an area closer to the recess of the guide than the intermediate position of the guide in which the pawl sits when at rest
wherein the displacement of the coupling member in the guide of the receiving part causes the raising and lowering of the pawl, so that the end of the coupling member is lodged in the hook of the pawl,
wherein the elevation of the connecting device causes an inclination of the coupling member, which actuates the lever, causing an end of the pawl to engage in the said recess of the locking part,
wherein a displacement of the coupling member towards the back of the guide causes the rotation of the pawl, which in turn actuates the arming member, causing the arrangement of the said interference position
and wherein the coupling member, in a displacement towards the exterior of the guide, interferes with the arming member and causes the return movement of the arming member, which in turn actuates the pawl via the projection of the pawl, causing it to return to its resting position.

The device according to the present invention makes it possible to effect the connection and disconnection of an arm of an agricultural tractor vehicle without the need for the operator to leave the cab of the agricultural vehicle. The invention discloses a connecting device that depends solely on the action of a coupling member of a tractor vehicle, so that the connection and disconnection can be carried out safely, rapidly and easily.

In addition, no part of the device returns to its initial position under its own weight, thus ensuring that the dirt does not obstruct the kinematics of the device and impede its correct functioning.

Furthermore, the disconnection of the agricultural accessory is not possible during its use, thanks to the locking of the pawl, providing the necessary safety for using the accessory with this type of device.

Preferably, the pawl is arranged obliquely with respect to the guide when the pawl is in its resting position. In this way, the coupling member can cause the rotation of the pawl easily in order to effect the connecting with the device.

In one embodiment of the present invention, a displacement of the coupling member up to the end of the guide causes the rotation of the pawl so that the line that joins the projection of the receiving part with the projection of the pawl passes over the articulation of the pawl and the elastic member ceases to actuate the pawl in the return direction to its resting position.

Optionally, the movement of the pawl is transmitted to the arming member, and vice versa, via the contact of the arming member with the projection of the pawl.

In one embodiment of the present invention, the pawl comprises a lower stop and an upper stop so that the movement of the pawl is transmitted to the arming member, and vice versa, via the contact of the stops with the arming member.

Advantageously, the trajectory of the groove comprises a straight section and a section of circular form whose centre corresponds with the articulation of the lock actuation part. This means that the elevation of the agricultural accessory is not limited by the nature of the lock actuation part.

Preferably, the arming member has an elongated and curved form.

Optionally, the elastic member is a linear spring and the elastic torsion member is a torsion spring.

To allow a better understanding, by way of explanatory and non-limitative example, some drawings are attached of an example of embodiment of the connecting device according to the present invention.
Figure 1 shows a schematic lateral view of an agricultural tractor with three-point connection attached to an agricultural sprayer.
Figure 2 shows a perspective view of a detail of the lower part of the face of the sprayer of Figure 1 arranged adjacent to the tractor.
Figure 3 shows a perspective view of the connecting device forming the subject of the present invention.
Figures 4 to 13 show diagrammatic views of the connecting device forming the subject of the present invention during the process of connecting, elevating and disconnecting an upper arm of an agricultural tractor.
Figure 14 shows a detail of an example of embodiment of the pawl, together with the arming member, in a diagrammatic view.

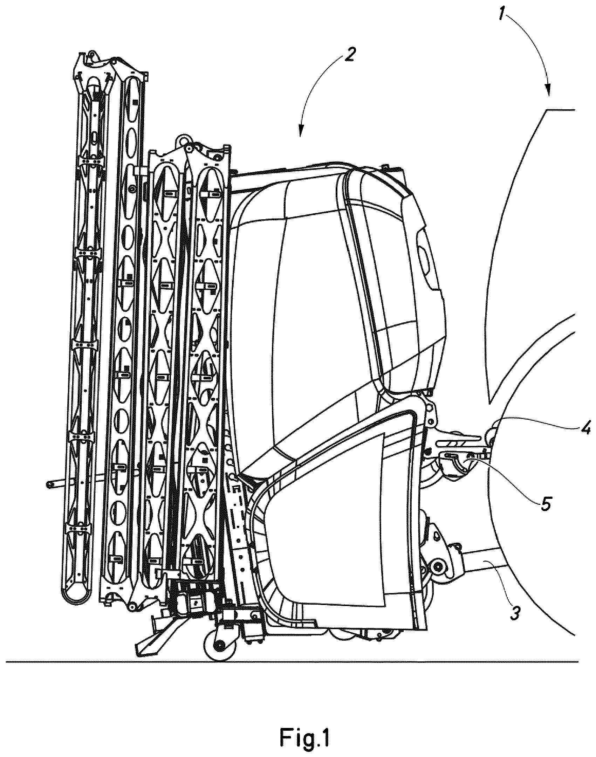

Figure 1 shows the rear part of an agricultural tractor -1- attached to un agricultural sprayer -2- by means of a three-point connecting device, comprising two lower arms -3- and an upper arm -4- arranged to be connected to the connecting device -5-.

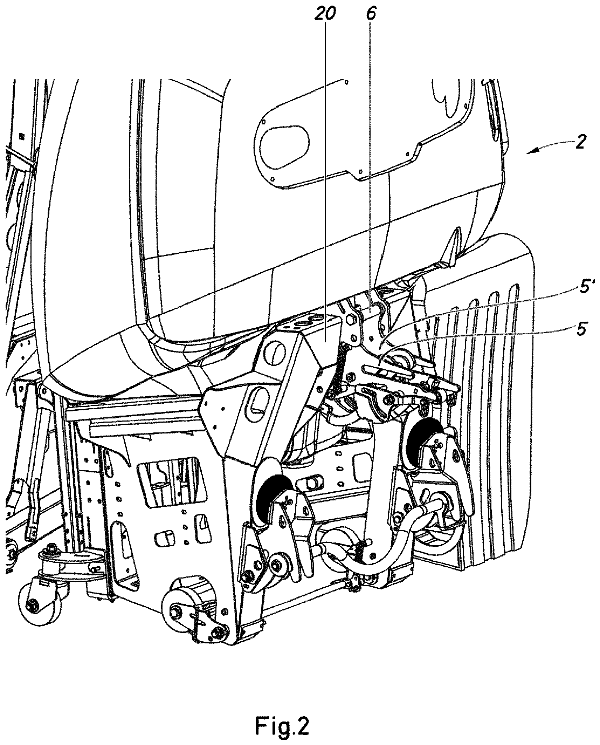

If the agricultural sprayer -2- is viewed from a closer viewing point and without the arms of the three-point device of the tractor (see Figure 2), the situation and nature of the connecting device -5- can be seen more clearly. This is a device which, in the example shown, is formed by two identical devices -5-, -5'-, which are arranged parallel to each other at a certain distance apart. The connecting devices -5-, -5'- are fixed to the chassis -20- of the agricultural sprayer -2- by means of two pins, of which a first pin -6- can be seen.

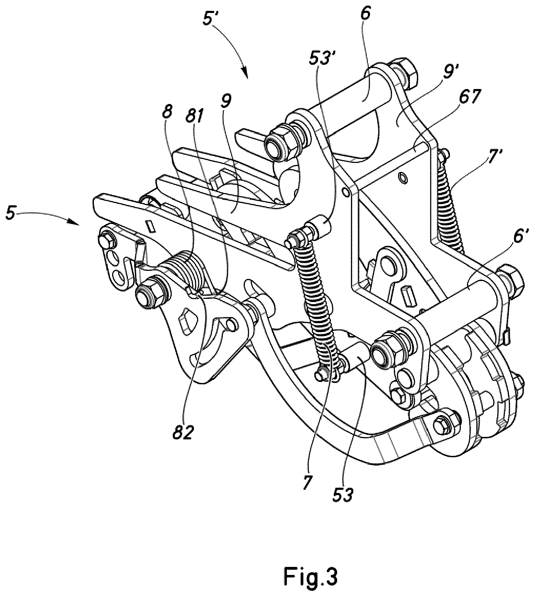

The complete connecting devices -5-, -5'- can be seen in Figure 3, wherein there is a first pin -6- and a second pin -6'-, both intended for fixing the device -5-, -5'- to the chassis -20- of the sprayer -2- (see Figure 2). Each of the devices -5-, -5'- is fixed to the chassis -20- of the sprayer -2- by means of a receiving part -9-, -9'-, which represents the only fixed part with respect to the chassis -20- of the sprayer -2-.

Each device -5-, -5'- comprises a linear spring -7-, -7'- and a torsion spring -8,- which cause the return movement of the parts to which they are attached. The torsion spring -8- holds a lug -81- in contact with the receiving part -9-, and the other lug in contact with an articulated part as will be described later. On the other hand, the linear spring -7- has one end attached to a projection -53'- of the receiving part -9- and the other end to a projection -53- of a rotating articulated member.

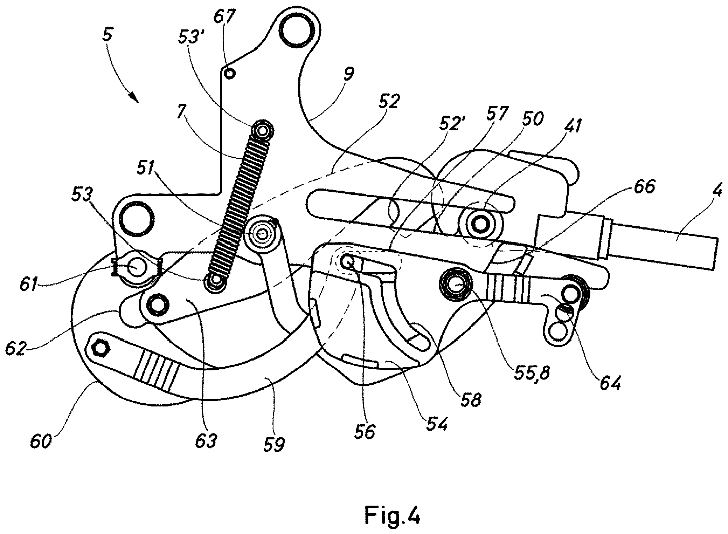

Since both devices -5-, -5'- are identical, in the remainder of this application only one of them will be described, namely the device -5-, for reasons of clarity. For this reason, Figures 4 to 13 show only the device -5-during the process of connecting and disconnecting the upper arm of the tractor. Moreover, again for reasons of clarity, the torsion spring -8- and the manner of its interaction with the rest of the device -5- have not been represented in the said figures, which show only the articulation in which the said torsion spring 8 is located.

The first step involves positioning the upper arm -4- in the connecting device -5-, as illustrated in Figure 4, wherein all the parts of the -5- are in their resting position. In this situation, the sprayer -2- is supported on the ground and the tractor approaches in reverse gear in order to effect the connecting. To this end, the upper arm -4- has, at its end, a hook that supports a cylindrical bar -41- inside it. The length of the said bar bridges the distance between the devices -5-, -5'-, being supported on a guide -50- of each part -9- of each of the devices -5-, -5'-. So that the bar -41- does not come out of the said hook of the arm -4-, it is provided with stops at its ends. As the arm -4- advances, the bar -41- makes contact with a pawl -52- attached to the receiving part -9- in an articulation -51-. The pawl -52- comprises, at a first mobile end -63-, a projection -53- (see Figure 3) attached to the receiving part -9- by means of a spring -7-. The second mobile end of the pawl -52- is a hook -52'- receiving the bar -41- of the coupling member -4-.

To position the upper arm -4- on the guide -50- of the receiving part -9-, the operator of the tractor -1- has a cord or cable (not illustrated) that allows him to perform the operation from the cab of the tractor -1-. The cord does not belong to the machine, but to the tractor -1-.

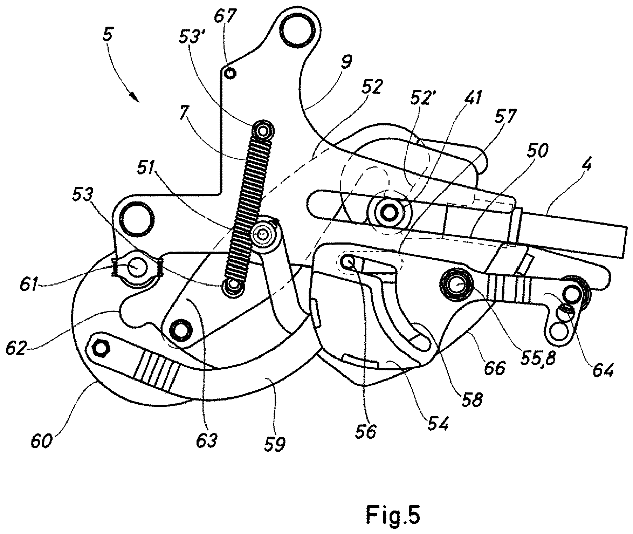

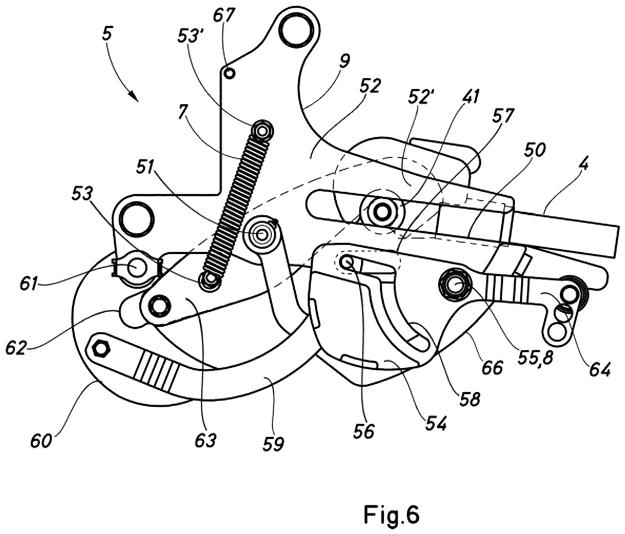

If the tractor keeps reversing, the cylindrical bar -41-of the upper arm -4- makes contact with the hook -52'- of the pawl -52-, and its forward motion causes the pawl -52-to rise and allow the bar -41- to continue advancing along the guide -50- (see Figure 5). This effect is favoured by the oblique position of the pawl -52- with respect to the guide -50-. When the bar -41- has passed beyond the position of the pawl -52- (see Figure 6), the latter returns to its original position under the action of the linear spring -7- (see Figure 3) . The said linear spring -7- has one end attached to the fixed part -9- of the device and the other end attached to the projection -53-(see Figure 3) of the pawl -52-, and its elastic action drives the pawl -52- into the resting position, which corresponds with the position of the pawl shown in Figures 4 and 6.

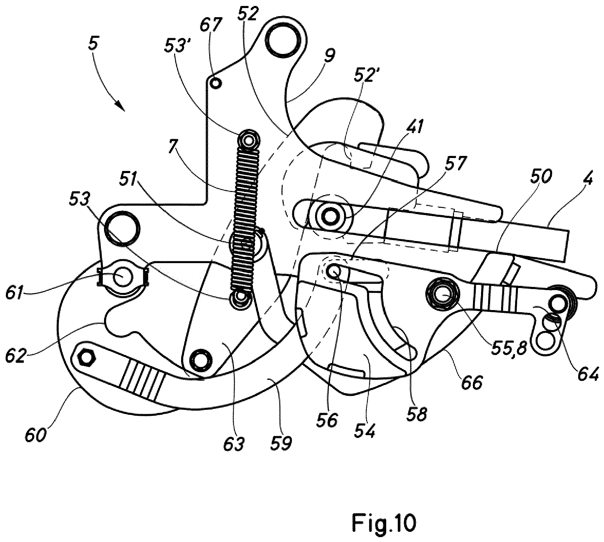

At this moment (Figure 6), the upper arm -4- of the tractor -1- is fixed by the pawl -52- of the connecting device -5-. If the tractor -1- moves forwards, the bar -41- cannot come out of the device -5- because the hook -52'- prevents it from doing so. However, the situation of Figure 6 does not correspond to a locking position, as indicated later in Figures 10 to 13.

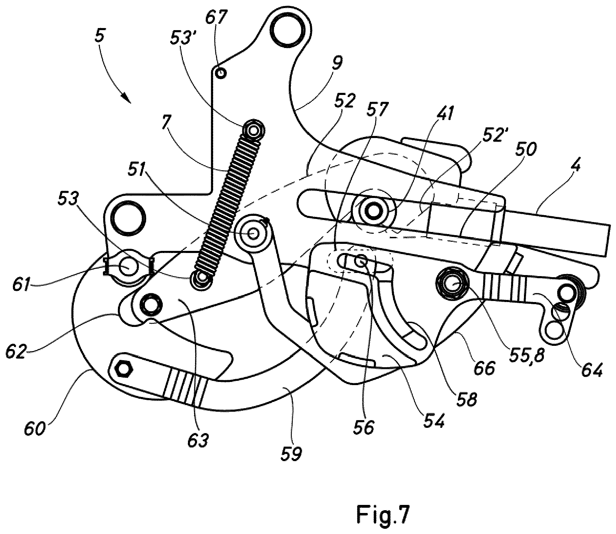

As can be seen in Figure 7, once fixed to the upper arm -4- with the pawl -52-, the lower arms -3- (see Figure 1) of the connecting device of the tractor -1- begin to elevate the agricultural sprayer -2- and the angle between the upper arm -4- and the guide -50- progressively increases, causing the arm -4- to come into contact with the lever -64- of a lock actuation part -54- and causing the said lever to rotate about an articulation -55- of the said lock actuation part -54-. The rotation of the lock actuation part -54- causes the displacement of a pin -56-whose movement is limited by an auxiliary groove -57- of the receiving part -9- (see Figure 3) and, in turn, by a guide -58- of the lock actuation part -54-. The said pin -56- is articulated to a connecting part -59- which connects it, again in articulated manner, with a lock -60-. The lock -60- has a recess -62- which engages with an end -63- of the pawl -52-.

The rotation of the lock actuation part -54- about its articulation -55- displaces the pin -56- along the auxiliary groove -57- of the receiving part -9-. The movement of the pin -56- drags the connecting part -59-, which in turn causes the rotation of the lock -60- on its articulation -61-. In this way, the recess -62- of the lock approaches the end -63- of the pawl -52- in order to lock its movement.

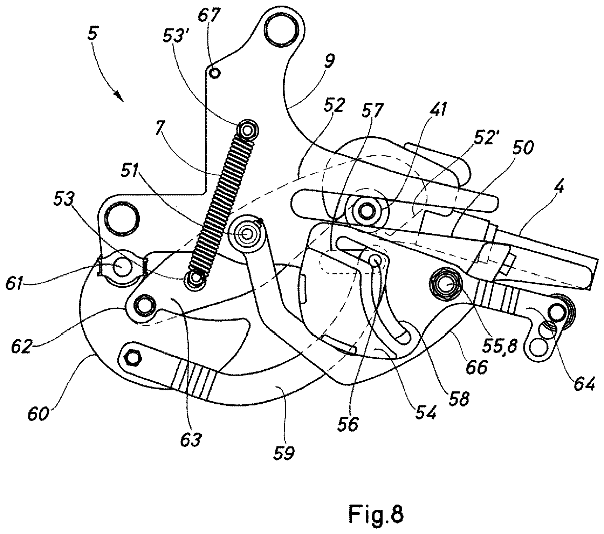

When the pin -56- reaches the end of the auxiliary groove -57- (see Figure 8) of the receiving part -9-, the recess -62- has come into contact with the end -63- of the pawl -52-, so that the pawl -52- cannot rotate. From this point of elevation, the upper arm -4- cannot be displaced by the guide -50- because it is fixed by the lock -60,- which prevents the movement of the pawl -52-, being engaged in its end -63-. Any type of brusque handling or movement will not entail the disconnection of the agricultural sprayer -2-. In order to be able to disconnect the sprayer -2-, it will be necessary to return to lower angles of inclination, as described later.

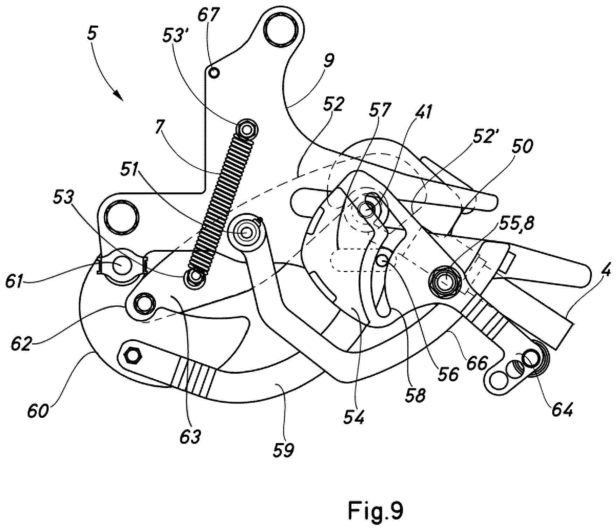

Once the pawl -52- is locked, the pin -56- remains in the end of the auxiliary groove -57-. In order to be able to continue with the elevation of the agricultural sprayer -2- from this point, as shown in Figure 9, the guide -58-of the lock actuation part -54- has a circular form that allows the pin -56- to remain in the end of the auxiliary groove -57- while it is displaced along the guide -58-. A degree of elevation is therefore allowed that is commensurate with the travel of the guide -58-, which is sufficiently long to allow sufficient elevation for the transportation and use of the sprayer -2-.

Once the sprayer -2- has been used in its elevated position, in order to effect the disconnection the upper arm -4- begins to incline downwards and a kinematic process opposite to that seen during elevation takes place (see Figures 7, 8 and 9) . Firstly, the upper arm -4- is raised with respect to the lock actuation part -54-. The said lock actuation part -54- can return to its original position while remaining in contact with the upper arm -4-due to the actuation of the torsion spring -8- (see Figure 3), which is arranged in the articulation -55- of the lock actuation part -54-. If the torsion spring -8- did not exist, the part -54- could get stuck due to the high friction produced between the parts by the dirt and soil accumulated in the device after using the sprayer -2-.

As the sprayer -2- descends, the angle between the guide -50- and the upper arm -4- decreases. The pin -56- is displaced in a manner contrary to what takes place during the ascent of the sprayer -2-, that is, the lock actuation part -54-, as it rotates in a direction opposite to that seen during the ascent, causes the displacement of the pin -56- towards the other end of the auxiliary groove -57-. The connecting part -59- returns the lock -60- to its original position and the end -63- of the pawl -52- is released.

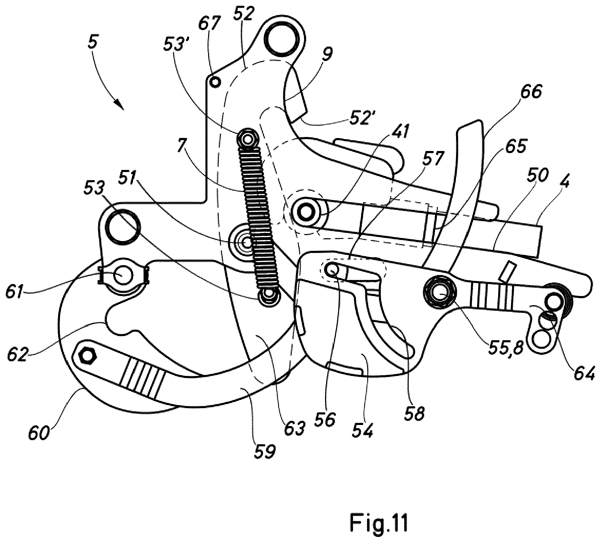

Once the sprayer -2- is supported on the ground, the upper arm -4- can be disconnected. To this end, as shown in Figure 10, the tractor -1- must make a backward movement, so that the upper arm -4- causes the pawl -52- to rotate. As the backward movement continues (see Figure 11), the rotation of the pawl -52- reaches a point where the action of the linear spring -7- cannot return to its original position, but remains in the vertical position as shown in Figure 11. During the travel to reach this limit position, the projection -53- of the pawl -52-, in which the linear spring -7- is articulated, comes into contact with an arming member -66- and displaces it in such a way that it extends above the guide -50-, defining an interference position -65-. In this position, the pawl -52- is supported against a stop -67-.

The linear spring -7- defines a line between its ends, which correspond with the projection -53- of the pawl -52- and the projection -53'- of the receiving part -9-. When the pawl -52- rotates, the said line sweeps an area. The spring -7- ceases to exert a return force on the pawl -52-at the moment when the said line passes beyond the articulation point -51- of the pawl -52-, reversing the effect of the spring -7- on the pawl -52-.

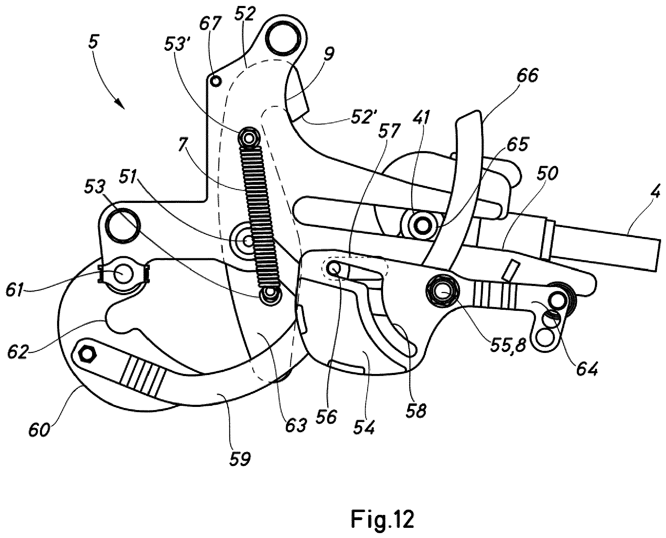

When the tractor -1- moves forwards in order to disconnect the upper arm -4-, the pawl -52- remains in the same position due to the action of the linear spring -7-, as shown in Figure 12. Thus, for as long the bar -41- of the upper arm -4- does not contact the arming member -66- in the interference position -65-, no reaction of the connecting device -5- is produced. Therefore, this situation constitutes a stable position of the pawl -52-.

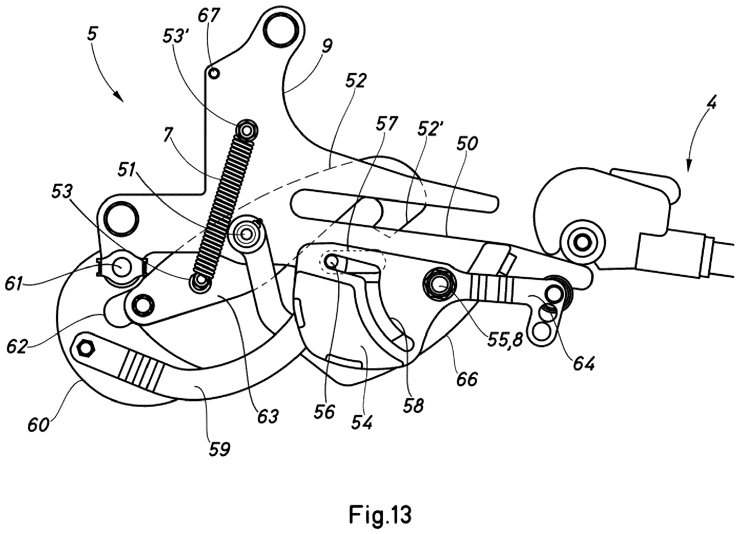

As can be seen in Figure 13, once the bar -41- of the arm -4- contacts the arming member -66-, the latter comes into contact with the projection -53- of the pawl -52- and causes it to rotate in a clockwise direction. Due to the rotation of the pawl -52-, the line between the projections -53-, -53'- again passes beyond the articulation -51- of the pawl -52-, and the spring -7-again exerts a return force on the pawl -52-, causing the pawl -52- to return to its initial position, and the connecting device is armed. The contact between the upper arm -4- and the arming member -66- takes place at a sufficient distance that, when the pawl -52- descends, the cylindrical bar -41- of the upper arm -4- is not within reach of the pawl -52-. At this moment, the device is again armed and ready for repeating the described process of connection and disconnection.

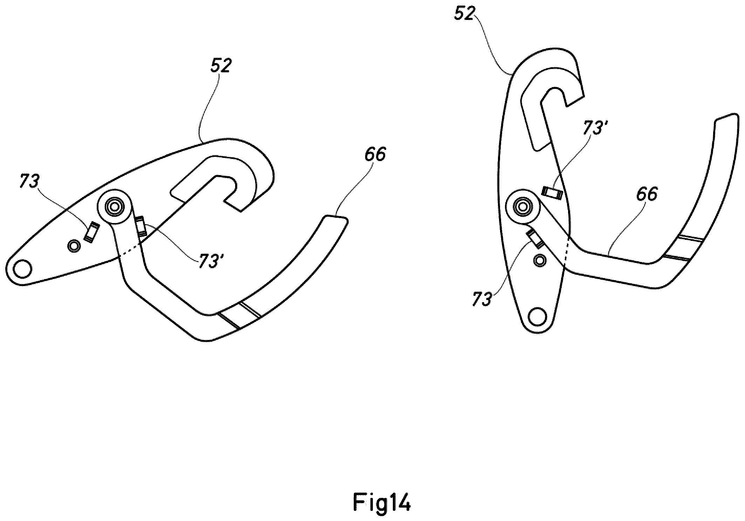

In the example of embodiment of Figure 14, the pawl -52-has a lower stop -73- and an upper stop -73'-, which come into contact with the arming member -66- in order to cause its movement during the rotation of the said pawl -52-. The two positions of the arming member -66- that are defined by the said stops -73-, -73'- can be seen.

Although the invention has been presented and described with reference to embodiments of the same, it will be understood that these embodiments are not limitative of the invention, since there could be multiple variables in terms of manufacturing or other details that will be evident to a person skilled in the art after interpreting the subject matter disclosed in the present invention, claims and drawings. Consequently, all variants or equivalents will be included in the scope of the present invention if they can be considered to fall within the broadest scope of the following claims.

## Claims

1. Device for connecting an agricultural accessory (2) to an agricultural tractor vehicle (1), **characterised in that** it comprises:
- a receiving part (9) adapted to be attached to the agricultural accessory (2), the said part (9) comprising a guide (50) adapted for displacement of a coupling member (4) attached to the agricultural tractor vehicle (1), an auxiliary groove (57) and a projection (53')
- a pawl (52) attached to the receiving part (9) in an articulation (51), the said pawl (52) comprising, at a first mobile end (63), a projection (53) attached to a projection (53') of the receiving part (9) via an elastic member (7) and, at a second mobile end, a receiving hook (52') for receiving an end of the said coupling member (4), the said pawl (52) being arranged, when at rest, in an intermediate position of the guide (50)
- a locking part (60) articulated to the receiving part (9) which has a recess (62) for receiving an end (63) of the pawl (52)
- a lock actuation part (54) attached to the receiving part (9) via an articulation (55) provided with an elastic torsion member (8), the said lock actuation part (54) comprising a groove (58) at one end and a lever (64) at a second end of the lock actuation part (54), the said second end being arranged opposite the first end in relation to the articulation (55)
- a connecting part (59) that has an end articulated with respect to the locking part (60) and an opposite end with a pin (56) that runs in the said groove (58) of the lock actuation part (54) and in the auxiliary groove (57) of the receiving part (9)
- an arming member (66) attached to the receiving part (9) in said articulation (51) in which said pawl is attached to said receiving part, the said arming (66) member having, in an area of its articulated travel with respect to the receiving part (9), a position of interference (65) with the coupling member (4), the said interference position (65) being in an area closer to the recess of the guide (50) than the intermediate position of the guide in which the pawl (52) sits when at rest
wherein the displacement of the coupling member (4) in the guide (50) of the receiving part (9) causes the raising and lowering of the pawl (52), so that the end of the coupling member (4) is lodged in the hook (52') of the pawl (52),
wherein the elevation of the connecting device causes an inclination of the coupling member (4), which actuates the lever (64) of the lock actuation part (54), causing an end (63) of the pawl (52) to engage in the said recess (62) of the locking part (60),
wherein a displacement of the coupling member (4) up to the end of the guide (50) causes the rotation of the pawl (52), which in turn actuates the arming member (66), causing the arrangement of the said interference position (67),
and wherein the coupling member (4), in a displacement towards the exterior of the guide (50), interferes with the arming member (66) and causes the return movement of the arming member (66), which in turn actuates the pawl (52) via the projection (53) of the pawl (52), causing it to return to its resting position.

2. Connecting device according to claim 1, wherein the pawl (52) is arranged obliquely with respect to the guide (50) when the pawl (52) is in its resting position.

3. Connecting device according to claim 2, wherein a displacement of the coupling member (4) up to the end of the guide (50) causes the rotation of the pawl (52) so that the line that joins the projection (53') of the receiving part (9) with the projection (53) of the pawl (52) passes over the articulation (51) of the pawl and the elastic member (7) ceases to actuate the pawl (52) in the return direction to its resting position.

4. Connecting device according to claim 3, wherein the movement of the pawl (52) is transmitted to the arming member (66), and vice versa, via the contact of the arming member (66) with the projection (53) of the pawl (52).

5. Connecting device according to claim 4, wherein the pawl comprises a lower stop (73) and an upper stop (73') so that the movement of the pawl (52) is transmitted to the arming member (66), and vice versa, via the contact of the stops (73, 73') with the arming member (66).

6. Connecting device according to claim 5, wherein the trajectory of the groove (58) comprises a straight section and a section of circular form whose centre corresponds with the articulation (55) of the lock actuation part (54) .

7. Connecting device according to claim 6, wherein the arming member (66) has an elongated and curved form.

8. Connecting device according to claim 7, wherein the elastic member (7) is a linear spring.

9. Connecting device according to claim 8, wherein the elastic torsion member (8) is a torsion spring.

## Patentansprüche

1. Vorrichtung zum Verbinden eines landwirtschaftlichen Zubehörs (2) mit einem landwirtschaftlichen Zugfahrzeug (1), **dadurch gekennzeichnet, dass** sie Folgendes umfasst:
- ein Aufnahmeteil (9), das dazu ausgelegt ist, an dem landwirtschaftlichen Zubehör (2) befestigt zu werden, wobei das Teil (9) eine Führung (50), die zur Versetzung eines Kopplungselements (4) ausgelegt ist, das an dem landwirtschaftlichen Zugfahrzeug (1) befestigt ist, eine Hilfsrille (57) und eine Erhebung (53') umfasst
- eine an dem Aufnahmeteil (9) in einer Gelenkverbindung (51) befestigte Sperrklinke (52), wobei die Sperrklinke (52) an einem ersten mobilen Ende (63) eine durch ein elastisches Element (7) an einer Erhebung (53') des Aufnahmeteils (9) befestigte Erhebung (53) umfasst, und an einem zweiten mobilen Ende einen Aufnahmehaken (52') zum Aufnehmen eines Endes des Kopplungselements (4), wobei die Sperrklinke (52) in Ruhestellung in einer Zwischenposition der Führung (50) angeordnet ist
- ein an das Aufnahmeteil (9) angelenktes Verriegelungsteil (60), welches eine Aussparung (62) zum Aufnehmen eines Endes (63) der Sperrklinke (52) aufweist
- ein durch eine mit einem elastischen Torsionselement (8) versehene Gelenkverbindung (55) an dem Aufnahmeteil (9) befestigtes Riegelbetätigungsteil (54), wobei das Riegelbetätigungsteil (54) an einem Ende eine Rille (58) und an einem zweiten Ende des Riegelbetätigungsteils (54) einen Hebel (64) umfasst, wobei das zweite Ende in Bezug auf die Gelenkverbindung (55) dem ersten Ende gegenüberliegend angeordnet ist
- ein Verbindungsteil (59), das ein bezüglich des Verriegelungsteils (60) angelenktes Ende und ein gegenüberliegendes Ende mit einem Stift (56) aufweist, der in der Rille (58) des Riegelbetätigungsteils (54) und in der Hilfsrille (57) des Aufnahmeteils (9) geführt wird
- ein an dem Aufnahmeteil (9) in der Gelenkverbindung (51), in welcher die Sperrklinke an dem Aufnahmeteil befestigt ist, befestigtes Armierungselement (66), wobei das Armierungselement (66) in einem Bereich seiner angelenkten Fortbewegung bezüglich des Aufnahmeteils (9) eine Interferenzposition (65) mit dem Kopplungselement (4) aufweist, wobei die Interferenzposition (65) sich in einem Bereich näher an der Aussparung der Führung (50) als die Zwischenposition der Führung befindet, in welcher die Sperrklinke (52) in Ruhestellung sitzt
wobei die Versetzung des Kopplungselements (4) in der Führung (50) des Aufnahmeteils (9) das Anheben und Absenken der Sperrklinke (52) bewirkt, sodass das Ende des Kopplungselements (4) in dem Haken (52') der Sperrklinke (52) eingelegt ist,
wobei die Erhöhung der Verbindungsvorrichtung eine Neigung des Kopplungselements (4) bewirkt, welche den Hebel (64) des Riegelbetätigungsteils (54) betätigt, was bewirkt, dass ein Ende (63) der Sperrklinke (52) in die Aussparung (62) des Verriegelungsteils (60) eingreift,
wobei eine Versetzung des Kopplungselements (4) nach oben zum Ende der Führung (50) die Rotation der Sperrklinke (52) bewirkt, welche ihrerseits das Armierungselement (66) betätigt, was die Anordnung der Interferenzposition (67) bewirkt,
und wobei das Kopplungselement (4), in einer Versetzung hin zum Äußeren der Führung (50), mit dem Armierungselement (66) interferiert und die Rückkehrbewegung des Armierungselements (66) bewirkt, welches seinerseits die Sperrklinke (52) durch die Erhebung (53) der Sperrklinke (52) betätigt, was bewirkt, dass sie in ihre Ruheposition zurückkehrt.

2. Verbindungsvorrichtung nach Anspruch 1, wobei die Sperrklinke (52) bezüglich der Führung (50) schräg angeordnet ist, wenn die Sperrklinke (52) sich in ihrer Ruheposition befindet.

3. Verbindungsvorrichtung nach Anspruch 2, wobei eine Versetzung des Kopplungselements (4) nach oben zu dem Ende der Führung (50) die Rotation der Sperrklinke (52) bewirkt, sodass die Linie, die die Erhebung (53') des Aufnahmeteils (9) mit der Erhebung (53) der Sperrklinke (52) verbindet, über die Gelenkverbindung (51) der Sperrklinke tritt und das elastische Element (7) aufhört, die Sperrklinke (52) in die Rückkehrrichtung in ihre Ruheposition zu betätigen.

4. Verbindungsvorrichtung nach Anspruch 3, wobei die Bewegung der Sperrklinke (52) durch den Kontakt des Armierungselements (66) mit der Erhebung (53) der Sperrklinke (52) auf das Armierungselement (66) und vice versa übertragen wird.

5. Verbindungsvorrichtung nach Anspruch 4, wobei die Sperrklinke einen unteren Anschlag (73) und einen oberen Anschlag (73') umfasst, sodass die Bewegung der Sperrklinke (52) durch den Kontakt der Anschläge (73, 73') mit dem Armierungselement (66) auf das Armierungselement (66) und vice versa übertragen wird.

6. Verbindungsvorrichtung nach Anspruch 5, wobei die Trajektorie der Rille (58) einen geraden Abschnitt und einen Abschnitt von kreisförmiger Form umfasst, dessen Mittelpunkt mit der Gelenkverbindung (55) des Riegelbetätigungsteils (54) übereinstimmt.

7. Verbindungsvorrichtung nach Anspruch 6, wobei das Armierungselement (66) eine längliche und gekrümmte Form aufweist.

8. Verbindungsvorrichtung nach Anspruch 7, wobei das elastische Element (7) eine lineare Feder ist.

9. Verbindungsvorrichtung nach Anspruch 8, wobei das elastische Torsionselement (8) eine Torsionsfeder ist.

## Revendications

1. Dispositif de raccordement d'un accessoire agricole (2) à un véhicule tracteur agricole (1), **caractérisé en ce qu'**il comprend :
- une partie de réception (9) adaptée pour être fixée à l'accessoire agricole (2), ladite partie (9) comprenant un guide (50) adapté pour déplacer un élément de couplage (4) fixé au véhicule tracteur agricole (1), une rainure auxiliaire (57) et une saillie (53'),
- un cliquet (52) fixé à la partie de réception (9) dans une articulation (51), ledit cliquet (52) comprenant, au niveau d'une première extrémité mobile (63), une saillie (53) fixée à une saillie (53') de la partie de réception (9) via un élément élastique (7) et, au niveau d'une deuxième extrémité mobile, un crochet de réception (52') pour recevoir une extrémité dudit élément de couplage (4), ledit cliquet (52) étant agencé, lorsqu'il est au repos, dans une position intermédiaire du guide (50),
- une partie de verrouillage (60) articulée sur la partie de réception (9) qui a un évidement (62) pour recevoir une extrémité (63) du cliquet (52),
- une partie d'actionnement de verrou (54) fixée à la partie de réception (9) via une articulation (55) munie d'un élément de torsion élastique (8), ladite partie d'actionnement de verrou (54) comprenant une rainure (58) au niveau d'une extrémité et un levier (64) au niveau d'une deuxième extrémité de la partie d'actionnement de verrou (54), ladite deuxième extrémité étant agencée en regard de la première extrémité par rapport à l'articulation (55),
- une partie de raccordement (59) qui a une extrémité articulée par rapport à la partie de verrouillage (60) et une extrémité opposée ayant une broche (56) qui se déplace dans ladite rainure (58) de la partie d'actionnement de verrou (54) et dans la rainure auxiliaire (57) de la partie de réception (9),
- un élément de mise en service (66) fixé à la partie de réception (9) dans ladite articulation (51) dans laquelle ledit cliquet est fixé à ladite partie de réception, ledit élément de mise en service (66) ayant, dans une zone de sa course articulée par rapport à la partie de réception (9), une position d'interférence (65) avec l'élément de couplage (4), ladite position d'interférence (65) se trouvant dans une zone plus proche de l'évidement du guide (50) que la position intermédiaire du guide dans laquelle le cliquet (52) repose lorsqu'il est au repos,
dans lequel le déplacement de l'élément de couplage (4) dans le guide (50) de la partie de réception (9) provoque le soulèvement et l'abaissement du cliquet (52), de sorte que l'extrémité de l'élément de couplage (4) soit logée dans le crochet (52') du cliquet (52),
dans lequel l'élévation du dispositif de raccordement provoque une inclinaison de l'élément de couplage (4), qui actionne le levier (64) de la partie d'actionnement de verrou (54), provoquant l'engagement d'une extrémité (63) du cliquet (52) dans ledit évidement (62) de la partie de verrouillage (60),
dans lequel un déplacement de l'élément de couplage (4) jusqu'à l'extrémité du guide (50) provoque la rotation du cliquet (52), qui actionne à son tour l'élément de mise en service (66) provoquant l'agencement de ladite position d'interférence, et
dans lequel l'élément de couplage (4), dans un déplacement vers l'extérieur du guide (50), interfère avec l'élément de mise en service (66) et provoque le mouvement de retour de l'élément de mise en service (66), qui actionne à son tour le cliquet (52) via la saillie (53) du cliquet (52), le ramenant à sa position de repos.

2. Dispositif de raccordement selon la revendication 1, dans lequel le cliquet (52) est agencé de manière oblique par rapport au guide (50) lorsque le cliquet (52) se trouve dans sa position de repos.

3. Dispositif de raccordement selon la revendication 2, dans lequel un déplacement de l'élément de couplage (4) jusqu'à l'extrémité du guide (50) provoque la rotation du cliquet (52) de sorte que la ligne qui relie la saillie (53') de la partie de réception (9) à la saillie (53) du cliquet (52) passe au-dessus de l'articulation (51) du cliquet et l'élément élastique (7) cesse d'actionner le cliquet (52) dans la direction de retour vers sa position de repos.

4. Dispositif de raccordement selon la revendication 3, dans lequel le mouvement du cliquet (52) est transmis à l'élément de mise en service (66), et inversement, via le contact de l'élément de mise en service (66) avec la saillie (53) du cliquet (52).

5. Dispositif de raccordement selon la revendication 4, dans lequel le cliquet comprend une butée inférieure (73) et une butée supérieure (73') de sorte que le mouvement du cliquet (52) soit transmis à l'élément de mise en service (66), et inversement, via le contact des butées (73, 73') avec l'élément de mise en service (66).

6. Dispositif de raccordement selon la revendication 5, dans lequel la trajectoire de la rainure (58) comprend une section droite et une section de forme circulaire dont le centre correspond à l'articulation (55) de la partie d'actionnement de verrou (54).

7. Dispositif de raccordement selon la revendication 6, dans lequel l'élément de mise en service (66) a une forme allongée et incurvée.

8. Dispositif de raccordement selon la revendication 7, dans lequel l'élément élastique (7) est un ressort linéaire.

9. Dispositif de raccordement selon la revendication 8, dans lequel l'élément de torsion élastique (8) est un ressort de torsion.
